# EUROPEAN PATENT APPLICATION

(11) **EP 4 227 865 A1**
(43) Date of publication of application: **16.08.2023**
(21) Application number: 20956753.6
(22) Date of filing: 08.10.2020
(51) Int. Cl.: G06N 20/00

(54) **OUTPUT CONTROL PROGRAM, OUTPUT CONTROL METHOD, AND INFORMATION PROCESSING DEVICE**

(71) Applicant: FUJITSU LIMITED, Kawasaki-shi, Kanagawa 211-8588 (JP)
(72) Inventor: ISHIZAKI, Ryo, Kawasaki-shi, Kanagawa 211-8588 (JP)
(74) Representative: Hoffmann Eitle
(86) International application number: PCT/JP2020/038216
(87) International publication number: WO 2022/074806

(57) **Abstract**

An information processing device acquires, by inputting first data into a machine learning model, an estimation result output by the machine learning model. Then when a first value included in the estimation result is lower than a threshold, by inputting the first data to a linear model generated based on the first data and the estimation result, the information processing device acquires a second value output by the linear model. Thereafter, the information processing device controls output of the estimation result based on a difference between the first value and the second value.

## Description

### Technical Field

The present invention relates to an output control program and the like for performing display control of estimation results of a machine learning model.

### Background Art

For the estimation results of machine learning models using machine learning such as deep learning (DL), measures such as re-execution of machine learning, validation of the estimation results by the user, and the like may be taken. On the other hand, machine learning models, although highly accurate, have complicated internal structures and the like, so that it is difficult to interpret the reasons for the estimation. In recent years, there is a technology known to select, among the estimation results output by a machine learning model in response to input of estimation target data, the estimation result having low confidence degree of the estimation result output by the machine learning model, as the target of measure.

### Citation List

### Patent Literature

Non Patent Literature 1: Marco Tulio Rebeiro, et al., ""Why Should I Trust You?" Explaining the Predictions of Any Classifier", arXiv:1602.04938v3, August 16, 2016.

### Summary of invention

### Technical Problem

However, with the above technology, the confidence degree of the estimation results is not always accurate information due to the number of pieces and nature of the training data used for machine learning of the machine learning model.

In one aspect, it is an object to provide an output control program, an output control method, and an information processing device capable of controlling output of the estimation result of a machine learning model.

### Solution to Problem

According to an aspect of an embodiment, an output control program causing a computer to execute a process including first acquiring, by inputting first data into a machine learning model, an estimation result output by the machine learning model, when a first value included in the estimation result is lower than a threshold, by inputting the first data to a linear model generated based on the first data and the estimation result, second acquiring a second value output by the linear model, and controlling output of the estimation result based on a difference between the first value and the second value.

### Advantageous Effects of Invention

According to one embodiment, it is possible to control the output of the estimation result of the machine learning model.

### Brief Description of Drawings

FIG. 1 is a diagram for describing processing of an information processing device according to a first embodiment.
FIG. 2 is a diagram for describing a reference narrowing-down technology related to measures.
FIG. 3 is a functional block diagram illustrating a functional configuration of the information processing device according to the first embodiment.
FIG. 4 is a diagram for describing an example of a training data set.
FIG. 5 is a diagram for describing an example of an estimation data set.
FIG. 6 is a diagram for describing estimation processing.
FIG. 7 is a diagram for describing a linear model.
FIG. 8 is a diagram for describing an index for an individual a.
FIG. 9 is a diagram for describing an index for an individual b.
FIG. 10 is a diagram for describing selection of a target of measure.
FIG. 11 is a flowchart illustrating a flow of processing.
FIG. 12 is a diagram for describing generation of a measure determination model.
FIG. 13 is a diagram for describing measure determination using the measure determination model.
FIG. 14 is a diagram for describing an example of a hardware configuration.

### Description of Embodiments

Hereinafter, embodiments of an output control program, an output control method, and an information processing device according to the present invention will be described in detail with reference to the accompanying drawings. Note that the present invention is not limited by the embodiments. Furthermore, each of the embodiments can be combined as needed within a range having no contradiction.

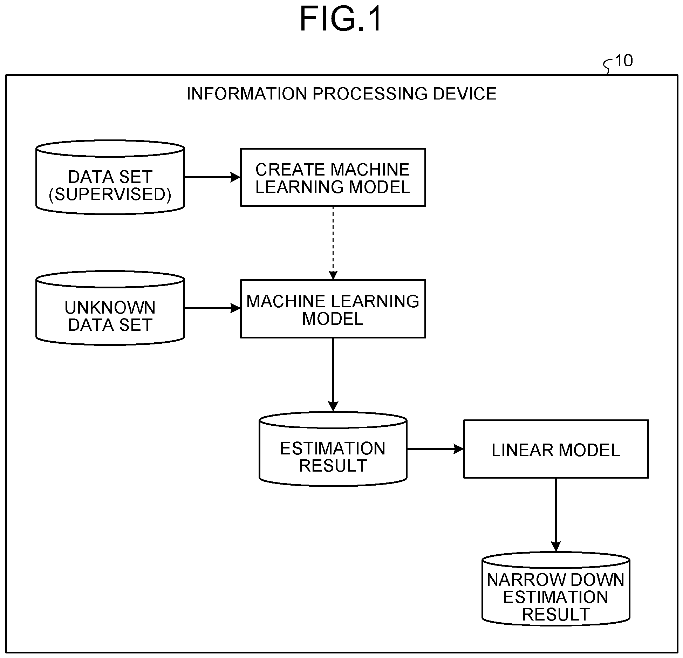

FIG. 1 is a diagram for describing processing of an information processing device 10 according to a first embodiment. The information processing device 10 illustrated in FIG. 1 is an example of a computer that executes estimation by using a machine learning model for large-scale data and, for the estimation result, narrows down the target for a user to execute some kind of measure such as re-examination or re-investigation. In other words, the information processing device 10 interprets and presents the estimation result of the machine learning model, which is a black box, from the perspective of the user.

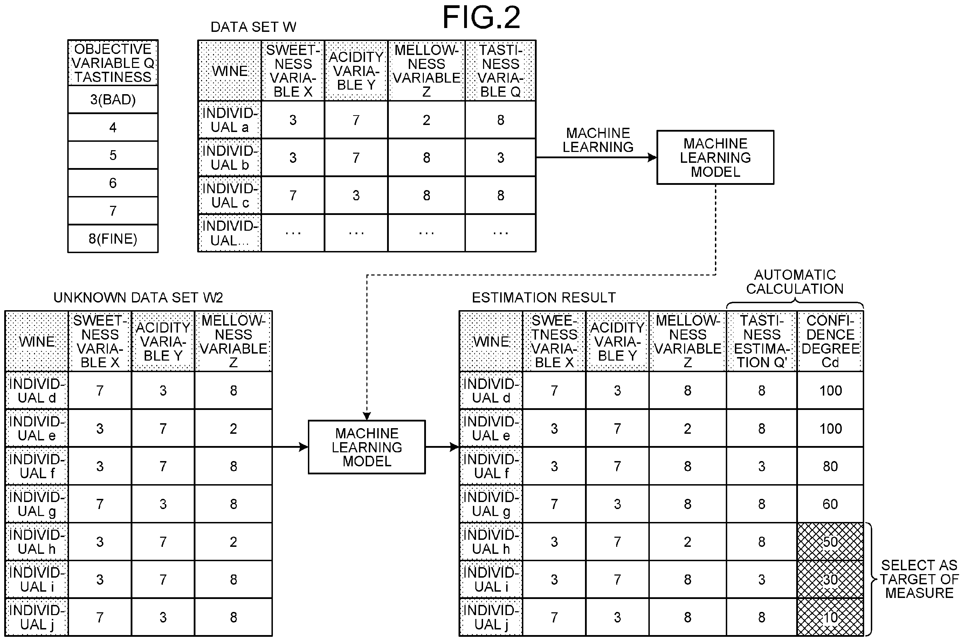

Here, a reference technology for narrowing down the estimation result into the target of measure will be described. FIG. 2 is a diagram for describing the reference narrowing-down technology related to measures. The reference technology illustrated in FIG. 2, as an example, estimates the tastiness of wine, and executes processing for narrowing down the wine with a poor estimation result as the target of measure.

Specifically, the reference technology generates a machine learning model using a training data set W. In the training data set W, "sweetness variable X, acidity variable Y, mellowness variable Z, and tastiness variable Q" are set for each individual wine (lot). Note here that the "sweetness variable X, acidity variable Y, and mellowness variable Z" are explanatory variables that determine the tastiness of wine. The "tastiness variable Q" is an objective variable that indicates the tastiness of wine on a scale of 3 (bad) to 8 (fine), for example. Each piece of data of individual wine is used as training data, and a machine learning model for estimating the tastiness of the wine based on each of variables of sweetness, acidity, and mellowness is generated.

When a machine learning model is generated, the reference technology inputs each piece of estimation target data (individual wine data) in an unknown data set W2, into the machine learning model to acquire estimation results regarding the tastiness of each individual wine. At this time, the machine learning model outputs, as the estimation result, "tastiness estimation Q'" indicating the estimation value of tastiness and "confidence degree Cd" indicating the confidence degree of the estimation value.

Then, the reference technology selects an individual h, an individual i, and an individual j, whose "confidence degree Cd" is equal to or less than a threshold, as the target of measure, regardless of the "tastiness estimation Q'". Thereafter, "tastiness estimation" is requested to the manufacturer, a sommelier, or a craftsman for each of the selected individual wines h, i, and j, in order to maintain the taste of wine and to maintain the reliability of the product.

However, depending on the number of pieces and nature of the training data used for machine learning of the machine learning model, the confidence degree of the estimation results is not always accurate information, and it may sometimes be ineffective to narrow down the target of measure based on the confidence degree alone.

For example, it is effective to select, as the target of measure, an individual whose confidence degree corresponds to an estimation result of low confidence degree that is lower than a first threshold, such as a confidence degree of 50, and it is also effective to select, as not being the target of measure, an individual whose confidence degree corresponds to an estimation result of high confidence degree that is equal to or more than a second threshold, such as a confidence degree of 70. However, for an individual whose confidence degree corresponds to an estimation result of medium confidence degree that is equal to or more than the first threshold and less than the second threshold, such as a confidence degree of 60, it is difficult to select whether to be the target of measure based on the confidence degree alone. This is because, depending on the circumstances at the time of training the machine learning model, it is expected that there may be a lot of such individuals with a medium confidence degree, and if those are all included in the target of measure, it will take an enormous amount of time for the measure. On the other hand, if those are all excluded from the target of measure, the estimation result of low confidence degree may be included therein. As a result, data that does not need to take any measure may be selected as the target of measure, which results in increasing the time for the measure. Especially when there is a large amount of data with a low confidence degree of the estimation result, the accuracy is low and, furthermore, it takes an enormous amount of time for narrowing-down of the measure.

Thus, the information processing device 10 according to the first embodiment generates an index (evaluation index) for selecting the target of measure using the confidence degree calculated by the machine learning model and the estimation value of a method for approximating the behavior of the machine learning model to a linear model (linear regression model) from pseudo input/output, and narrows down the target of the measure based on the index.

Specifically, as illustrated in FIG. 1, the information processing device 10 generates a machine learning model using a data set containing supervised training data with labels. Then, the information processing device 10 inputs each piece of estimation target data contained in an unknown data set, into the machine learning model to acquire the estimation results. Then, when a first value included in the estimation result of first estimation target data is lower than a threshold, the information processing device 10 inputs the first estimation target data to a linear model generated based on the first estimation target data and the estimation result to acquire a second value output by the linear model. Thereafter, the information processing device 10 controls whether to output the first estimated target data as the target of measure based on a difference between the first value and the second value.

In this manner, the information processing device 10 executes narrowing-down of the target of measure using not only the confidence degree of the machine learning model but also the value of the linear model acquired by locally approximating the data having the same estimation result on a feature space of the machine learning model. As a result, the information processing device 10 can control the output of the estimation result of the machine learning model.

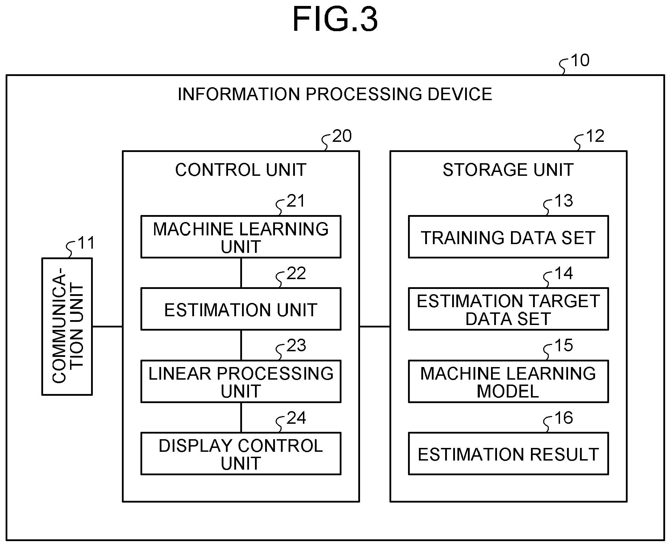

FIG. 3 is a functional block diagram illustrating a functional configuration of the information processing device 10 according to the first embodiment. As illustrated in FIG. 3, the information processing device 10 includes a communication unit 11, a storage unit 12, and a control unit 20.

The communication unit 11 controls communication with other devices. For example, the communication unit 11 receives various kinds of instructions such as an instruction to start machine learning, an instruction to narrow down the target of measure, and the like from an administrator terminal, and transmits the result of machine learning and the result of narrowing-down to the administrator terminal.

The storage unit 12 stores therein various kinds of data, computer programs executed by the control unit 20, and the like. For example, the storage unit 12 stores therein a training data set 13, an estimation target data set 14, a machine learning model 15, and an estimation result 16.

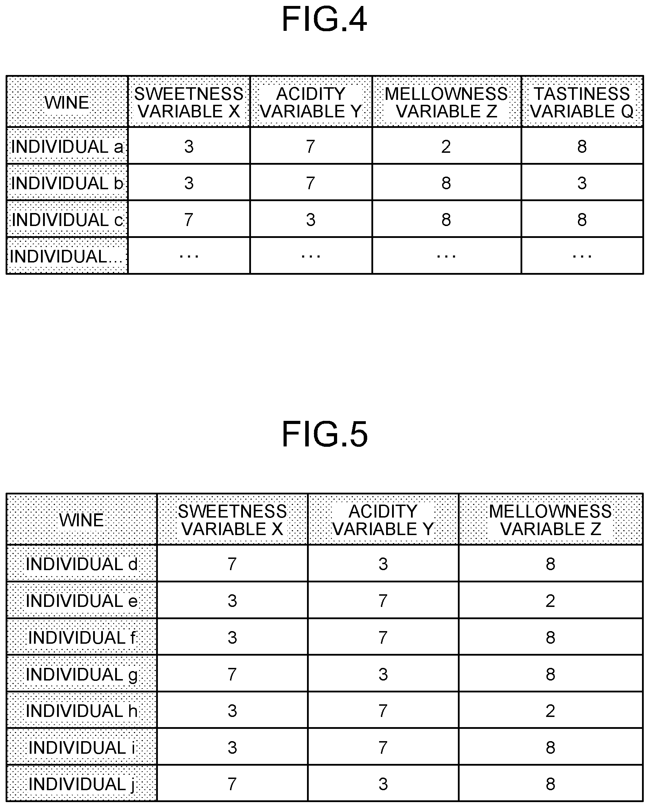

The training data set 13 includes a plurality of pieces of training data used for machine learning of the machine learning model 15. FIG. 4 is a diagram for describing an example of the training data set 13. As illustrated in FIG. 4, the training data set 13 includes training data configured with "wine, sweetness variable X, acidity variable Y, mellowness variable Z, and tastiness variable Q".

The "sweetness variable X" is a variable indicating the sweetness of wine, the "acidity variable Y" is a variable indicating the acidity of wine, and the "mellowness variable Z" is a variable indicating the mellowness of wine. These variables are values measured using a known technology, and indicated on a scale of 10 from the lowest value of 1 to the highest value of 10, for example. The "tastiness variable Q" is a variable that indicates the tastiness of wine, and indicated on a scale of 10 from the lowest value of 1 to the highest value of 10, for example. Note that the "tastiness variable Q" may be measured using a known technology, or results of tasting done by a craftsman or the like may be set for that.

Here, in machine learning, the "sweetness variable X, acidity variable Y, and mellowness variable Z" are explanatory variables, and the "tastiness variable Q" is an objective variable. In the example of FIG. 4, "sweetness variable X = 3, acidity variable Y = 7, mellowness variable Z = 2, and tastiness variable Q = 8" are set for an individual wine a, and "sweetness variable X = 3, acidity variable Y = 7, mellowness variable Z = 8, and tastiness variable Q = 3" are set for an individual wine b. In other words, the individual wine a has a better taste than the individual wine b does.

The estimation target data set 14 includes a plurality of pieces of estimation target data as the target to be estimated by using the machine learning model 15. FIG. 5 is a diagram for describing an example of the estimation target data set 14. As illustrated in FIG. 5, the estimation target data set 14 includes estimation data configured with "wine, sweetness variable X, acidity variable Y, and mellowness variable Z". Since the information stored herein is the same as the information described in FIG. 4, the explanation thereof is omitted. In the example of FIG. 5, "sweetness variable X = 7, acidity variable Y = 3, and mellowness variable Z = 8" are set for the individual a as the estimation target data.

The machine learning model 15 is a model generated by machine learning performed by the information processing device 10. For example, the machine learning model 15 is a model using a deep neural network (DNN) or the like, and it is possible to employ other machine learning or deep learning.

The estimation result 16 is the result of estimation for the estimation target data set 14. Specifically, the estimation result 16 is an estimation result acquired by inputting each piece of estimation target data of the estimation target data set 14 to the machine learning model 15 generated by machine learning. Note that the details will be described later.

The control unit 20 is a processing unit that controls the entire information processing device 10, and includes a machine learning unit 21, an estimation unit 22, a linear processing unit 23, and a display control unit 24.

The machine learning unit 21 generates the machine learning model 15 by performing machine learning using the training data set 13. For example, the machine learning unit 21 acquires the training data "individual a, sweetness variable X = 3, acidity variable Y = 7, mellowness variable Z = 2, and tastiness variable Q = 8" from the training data set 13. Then, the machine learning unit 21 inputs "sweetness variable X = 3, acidity variable Y = 7, and mellowness variable Z = 2" to the machine learning model 15 to acquire the output result of the machine learning model 15. Thereafter, the machine learning unit 21 executes machine learning of the machine learning model such that the error between the output result and the objective variable "tastiness variable Q = 8" becomes smaller.

In this manner, the machine learning unit 21 generates the machine learning model 15 by performing supervised learning using each piece of training data within the training data set 13. In other words, the machine learning unit 21 executes machine learning of the machine learning model 15 so as to be able to estimate the "tastiness variable Q" when the "sweetness variable X, acidity variable Y, and mellowness variable Z" are input to the machine learning model 15. Note that a known method such as error backpropagation can be employed for the machine learning method, and a known method such as least squares error can be employed for the error.

The estimation unit 22 executes estimation of the estimation target data by using the machine learning model 15. Specifically, the estimation unit 22 inputs each piece of estimation target data of the estimation target data set 14 to the generated machine learning model 15 to acquire the estimation result from the machine learning model 15, and stores it in the storage unit 12 as the estimation result 16. Here, the estimation result output by the machine learning model 15 includes "tastiness estimation Q'" and "confidence degree Cd" of the "tastiness estimation Q'". Note that the "tastiness estimation Q'" is what is called an estimation value, and it is calculated by "Qd = predFromDLmodel (X,Y,Z)". Furthermore, a softmax value output by the DNN can be used for the "confidence degree Cd" .

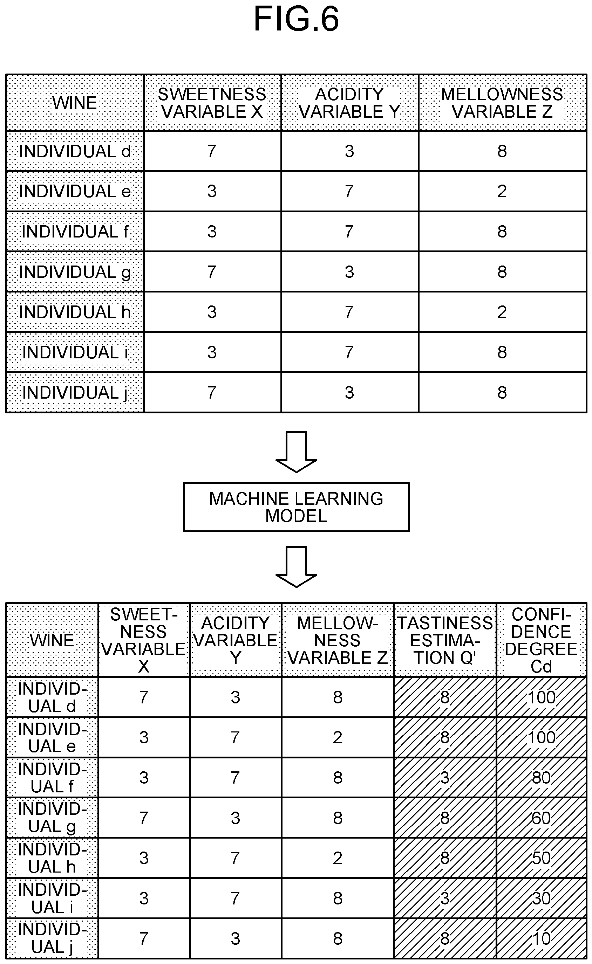

FIG. 6 is a diagram for describing estimation processing. As illustrated in FIG. 6, the estimation unit 22 inputs "sweetness variable X = 7, acidity variable Y = 3, and mellowness variable Z = 8" of an individual d into the machine learning model 15 to acquire "tastiness estimation Q' = 8" and "confidence degree Cd = 100". Similarly, the estimation unit 22 inputs "sweetness variable X = 3, acidity variable Y = 7, and mellowness variable Z = 2" of an individual e into the machine learning model 15 to acquire "tastiness estimation Q' = 8" and "confidence degree Cd = 100". Furthermore, the estimation unit 22 inputs "sweetness variable X = 3, acidity variable Y = 7, and mellowness variable Z = 8" of an individual f into the machine learning model 15 to acquire "tastiness estimation Q' = 3" and "confidence degree Cd = 80". In this manner, the estimation unit 22 generates the estimation result 16.

The linear processing unit 23 generates a linear model, and calculates the index for selecting the target of measure. For example, the linear processing unit 23 calculates the index for the individual whose confidence degree "Cd" of the machine learning model 15 is equal to or more than a lower threshold and less than an upper threshold. The display control unit 24 to be described later uses two pieces of information, the confidence degree acquired by the machine learning model 15 and the index generated by the linear processing unit 23, to narrow down the target of the measure.

First, the linear model will be described. As an example, the linear processing unit 23 generates the index using an algorithm called Local Interpretable Model-agnostic Explanations (LIME), which is independent of the machine learning model 15, the data format, and the structure of the machine learning model 15. With LIME, when explaining the estimation result (classification result) output by the machine learning model 15 to which data is input, a linear model whose output locally approximates the output of the machine learning model 15 in the vicinity of the data is generated as a model that can interpret the machine learning model 15. Neighborhood data acquired by varying some of the features of the data is used to generate such a linear model.

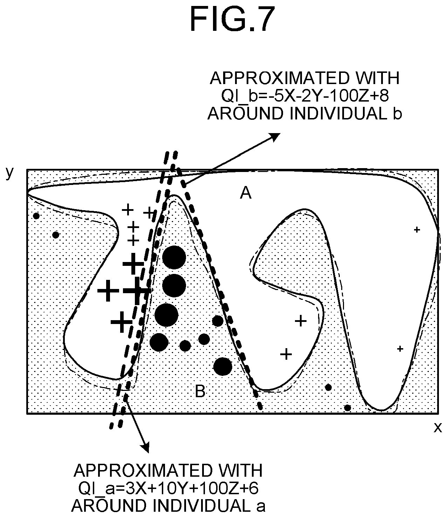

FIG. 7 is a diagram for describing the linear model. FIG. 7 illustrates the algorithm of LIME in a form of model and, as an example, schematically illustrates a two-dimensional feature space with features of x and y. FIG. 2 illustrates a region A corresponding to a positive example class where the tastiness estimation Q' is estimated to be equal to or more than a threshold (6, for example) and a region B corresponding to a negative example class where the tastiness estimation Q' is estimated to be less than the threshold value (6, for example). In other words, by using the algorithm of LIME, a feature space with the separation interfaces illustrated in FIG. 2 is generated.

Here, for example, the linear processing unit 23 inputs each piece of the estimation target data of the estimation target data set 14 into the machine learning model 15 to acquire the estimation result as well as the features, and generates the feature space indicated in FIG. 2 by the algorithm of LIME using the features.

Then, the linear processing unit 23 acquires, for the individual a estimated as a positive example, the estimation target data located at a prescribed distance from the individual a in the feature space as the neighborhood data. The linear processing unit 23 then uses the individual a and the neighborhood data to generate a linear model "Ql_a = 3X + 10Y + 100Z + 6" that is valid only for the neighborhood of the individual a and represents estimation of peripheral data of the individual a in an interpretable manner.

Similarly, for the individual b estimated to be a negative example, the linear processing unit 23 acquires the estimation target data located at a prescribed distance from the individual b in the feature space as the neighborhood data. The linear processing unit 23 then uses the individual b and the neighborhood data to generate a linear model "Ql_b = -5X - 2Y + 100Z + 8" that is valid only for the neighborhood of the individual b and represents estimation of peripheral data of the individual b in an interpretable manner. In this manner, for each individual (case), the linear processing unit 23 generates a linear model using data neighboring to each other in the feature space.

Next, the index to be the information for narrowing down the target of measure will be described. The linear processing unit 23 uses the estimation result of the machine learning model 15 and the linear model to generate the index to be the basis for determining the target of measure. Specifically, the linear processing unit 23 calculates the index using a difference between the "tastiness estimation Q'" included in the estimation result of the machine learning model 15 and the estimation value acquired by the linear model.

Here, the index will be described. The index can be expressed as a "local substitutability index" or the like for other mathematical expressions, as the degree that can be expressed locally in a simpler mathematical model (a linear property or the like rather than a nonlinear property). Note that the index can also be expressed as distortion or misalignment of a region difficult to approximate linearly in a space of a model automatically generated by the machine learning model 15, the degree of fit to the linear model, and the like. As described, the estimation value acquired by the linear model is a normalized value within a local region of the feature space of the machine learning model 15, and the estimation value of the machine learning model 15 is an empirical value acquired during machine learning, both of which are two types of estimation values of the machine learning model 15 that can be estimated directly. Therefore, the index using the difference therebetween can be positioned as "normalized" information to be able to make a comparison with the value across cases such as "whether it is a simple region that can be expressed by being replaced with another readily interpretable model such as a linear model", "whether it is the confidence degree derived from lack of experience in machine learning", "whether it is originally a difficult discrimination problem even with a lot of experience in machine learning", and the like.

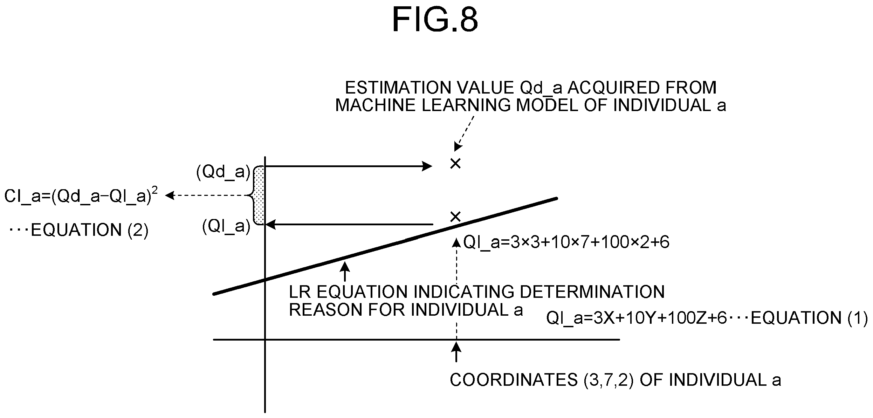

Next, calculation of the index for each of the individual a and the individual b will be described. FIG. 8 is a diagram for describing the index for the individual a. As illustrated in FIG. 8, the linear processing unit 23 acquires the data "sweetness variable X = 3, acidity variable Y = 7, and mellowness variable Z = 2" for the individual a from the estimation target data set 14. Then, the linear processing unit 23 acquires the estimation value "Qd_a = predFromDLmodel (3,7,2)" from the machine learning model 15 of the individual a. Furthermore, the linear processing unit 23 calculates "Ql_a = 3 × 3 + 10 × 7 + 100 × 2 + 6" by substituting each variable value into "Ql_a = 3X + 10Y + 100Z + 6" that is an equation (1) of the linear model for the individual a. Thereafter, the linear processing unit 23 calculates the index "Cl_a" as "Cl_a = ((Qd_a - Ql_a) squared)" according to an equation (2).

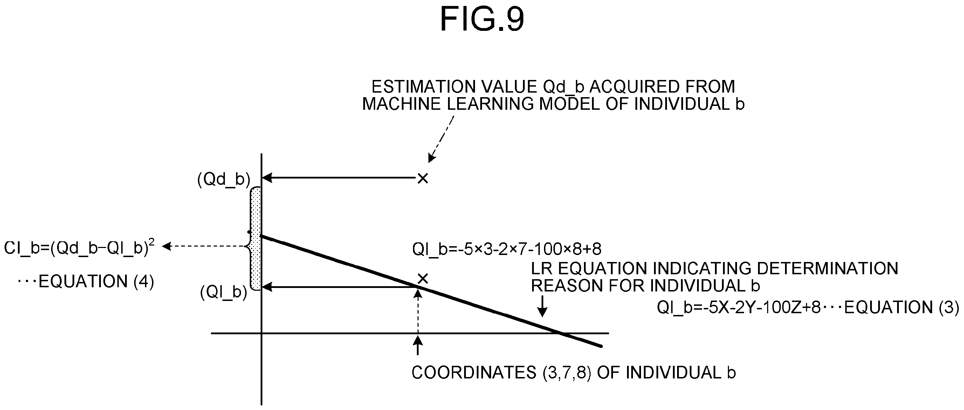

FIG. 9 is a diagram for describing the index for the individual b. As illustrated in FIG. 9, the linear processing unit 23 acquires the data "sweetness variable X = 3, acidity variable Y = 7, and mellowness variable Z = 8" for the individual b from the estimation target data set 14. Then, the linear processing unit 23 acquires the estimation value "Qd_b = predFromDLmodel (3,7,8)" from the machine learning model 15 of the individual b. Furthermore, the linear processing unit 23 calculates "Ql_b = -5 × 3 - 2 × 7 + 100 × 8 + 8" by substituting each variable value into "Ql_b = -5X - 2Y + 100Z + 8" that is an equation (3) of the linear model for the individual b. Thereafter, the linear processing unit 23 calculates the index "Cl_b" as "Cl_b = ((Qd_b - Ql_b) squared)" according to an equation (4).

Using the index calculation method described above, the linear processing unit 23 calculates the index for each individual whose confidence degree "Cd" of the machine learning model 15 is equal to or more than the lower threshold and less than the upper threshold, stores the indices in the storage unit 12, and outputs those to the display control unit 24. Note that the linear processing unit 23 can also calculate the indices for all individuals, or can calculate the indices for the individuals narrowed down in advance, as described above.

The display control unit 24 executes display control of the estimation result. For example, from the estimation result acquired by the estimation unit 22, the display control unit 24 selects the individual whose confidence degree Cd is less than the lower threshold as the target of measure, and selects the individual whose confidence degree Cd is equal to or more than the upper threshold as not being the target of measure. Furthermore, for the individual whose confidence degree Cd is equal to or more than the lower threshold and less than the upper threshold, the display control unit 24 selects it as the target of measure when the index calculated by the linear processing unit 23 is equal to or more than a threshold.

Then, the display control unit 24 stores the information regarding the individual selected for the target of measure in the storage unit 12, outputs and displays the information on a display unit such as a display, and transmits the information to the terminal of the administrator. The information regarding the individual may be the estimation target data itself, for example, or may be any information selected from the estimation target data.

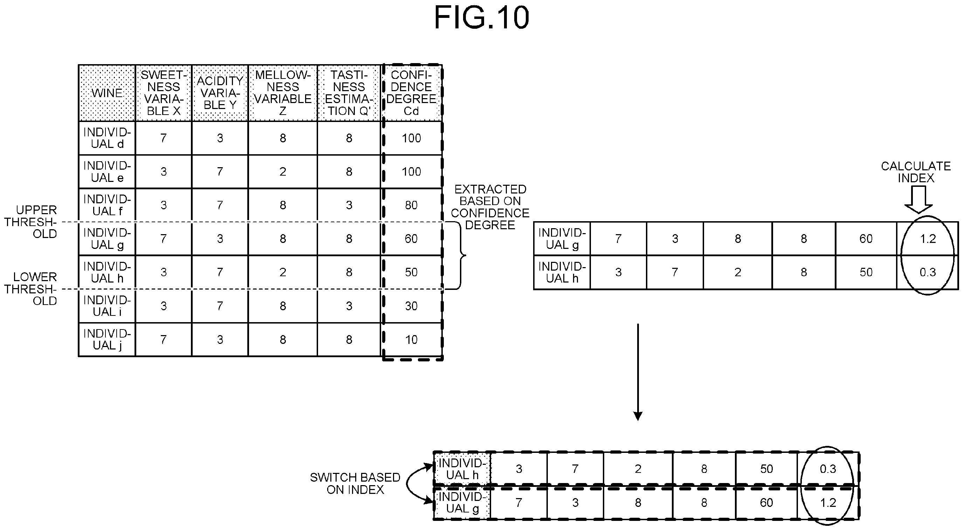

FIG. 10 is a diagram for describing selection of the target of measure. FIG. 10 indicates the estimation result estimated by the estimation unit 22 for the estimation target data set 14 indicated in FIG. 5. As indicated in FIG. 10, the display control unit 24 determines the individuals d, e, and f whose confidence degree Cd is equal to or more than the upper threshold as not being the output target, that is, as not being the target of measure. Furthermore, the display control unit 24 determines the individuals i and j whose confidence degree Cd is less than the lower threshold as the output target, that is, as the target of measure.

Then, the display control unit 24 determines the individuals g and h whose confidence degree Cd is less than the upper threshold and equal to or more than the lower threshold as measure candidates, and refers to the indices Cl calculated by the linear processing unit 23. Here, the display control unit 24 determines that the index Cl_g of the individual g is "1.2", the index Cl_h of the individual h is "0.3", and the index Cl_g "1.2" of the individual g is equal to or more than the threshold "0.8". The display control unit 24 then determines the individual g as the target of measure.

As a result, the display control unit 24 displays and outputs the information regarding the individuals g, i, and j each determined to be the target of measure. Note that the target of measure is only an example, and it is also possible to simply determine whether to take it as the target of display and output and the target of transmission. Although the example of making a determination by three stages of thresholds is described above, it is only an example. Two stages or the like of thresholds may be used for determination, and which stage is determined according to the index may be set arbitrarily.

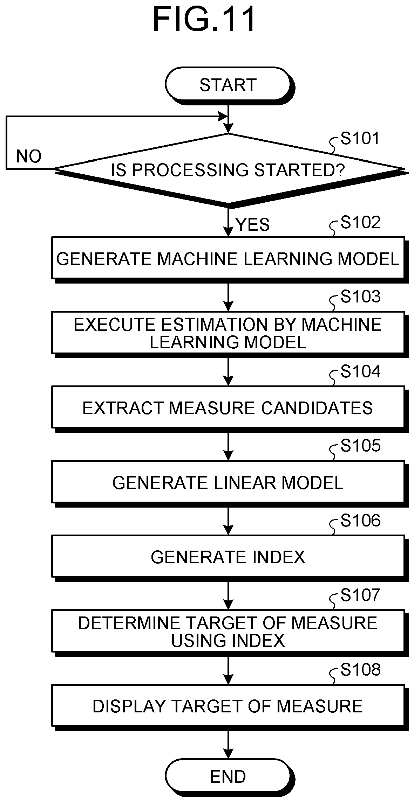

Next, a flow of processing regarding the determination as well as display and output of the target of measure will be described. FIG. 11 is a flowchart illustrating a flow of the processing. As illustrated in FIG. 11, when there is an instruction to start the processing (Yes at S101), the machine learning unit 21 generates the machine learning model 15 by performing machine learning using the training data set 13 (S102).

Subsequently, the estimation unit 22 executes estimation of the estimation target data using the machine learning model 15, and generates the estimation result 16 (S103). Then, the linear processing unit 23 uses the estimation value and confidence degree output by the machine learning model 15 to determine the target of measure, and extracts the measure candidates (S104).

Then, the linear processing unit 23 generates a linear model for the measure candidates (S105), and generates the index for narrowing down the measure candidates (S106). Thereafter, the display control unit 24 determines the target of measure by using the index (S107), and displays and outputs the determined target of measure (S108) .

As described above, the information processing device 10 can execute narrowing-down using not only the confidence degree of the machine learning model 15 but also the estimation value of the linear model, so that the reason for reducing the confidence degree of the machine learning model 15 can be indirectly interpreted and taken into account in determining the narrowing-down. As a result, the information processing device 10 can execute appropriate narrowing-down compared to the case of using only the confidence degree of the machine learning model 15.

For example, it is difficult for the user to manually determine whether an individual having a medium confidence degree of the machine learning model 15 is taken as the target of measure. If all individuals with a medium confidence degree are determined to be the target of measure, the number of targets of measure will increase and the cost related to the measure will increase as well. If all individuals with a medium confidence degree are excluded from the target of measure, it is concerned that the quality of the individuals will deteriorate.

Here, when the value of the index is equal to or more than the threshold, the information processing device 10 determines that the space is distorted because of poor approximation to linear regression. In other words, the information processing device 10 determines that it is a region of a difficult determination even though there were a large number of cases when the model around the region was created during machine learning, and determines to take measure (target of re-examination) since it is relatively not out of the target to be examined carefully by taking measure (re-examination).

On the other hand, when the value of the index is less than the threshold, the information processing device 10 determines that the approximation to linear regression is relatively good and the space is not distorted. In other words, the information processing device 10 determines that the region is of low confidence degree and difficult to make a determination, but contains elements with an enough degree of confidence since expected level of machine learning is executed, and excludes the region from the target of measure (re-examination).

As described, the information processing device 10 can appropriately select the target of measure by performing two-stage determination processing, including the determination of the target of measure using the confidence degree of the machine learning model 15 and the determination of the target of measure using the index based on the estimation value of the linear model.

By the way, while the target of measure using the index can also be made by making a comparison with an arbitrarily set threshold, it is also possible to use a measure determination model generated by machine learning. Thus, generation of the measure determination model and determination made by the measure determination model will be described in a second embodiment.

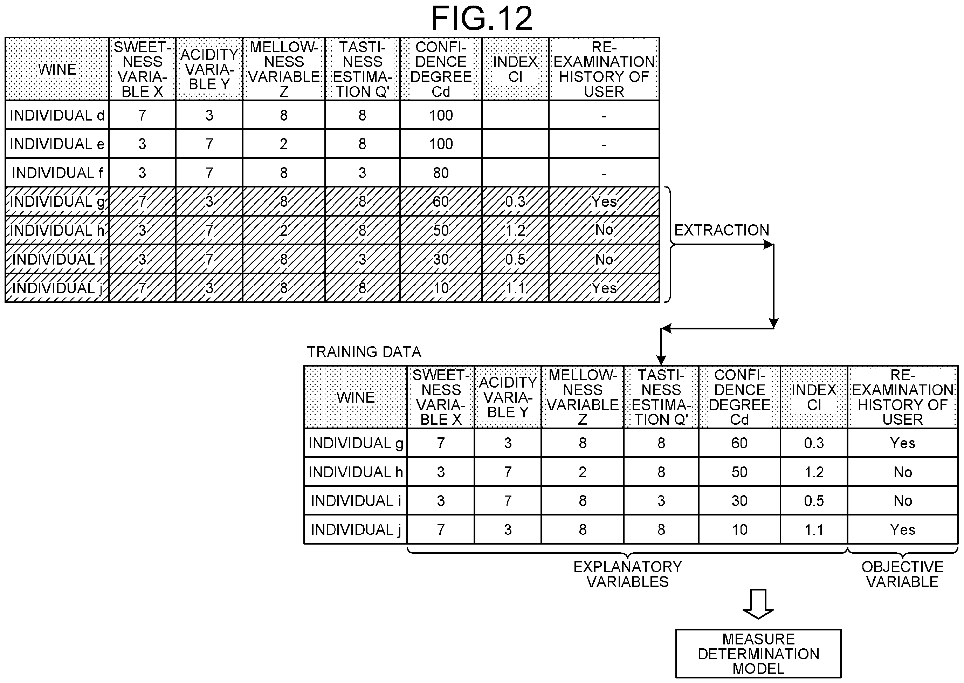

FIG. 12 is a diagram for describing generation of the measure determination model. Here, "individual d, individual e, individual f, individual g, individual h, individual i, and individual j" exist as the estimation target data, and "sweetness variable X, acidity variable Y, and mellowness variable Z" are set in advance for each of the individuals. Then, estimation using the machine learning model 15 is executed by the estimation unit 22 for each of the individuals to set the "tastiness estimation Q'", and calculated index "index Cl" is set by the linear processing unit 23.

In such a state, for "individual g, individual h, individual i, and individual j" selected as the target of measure among "individual d, individual e, individual f, individual g, individual h, individual i, and individual j" that are the estimated target data, the machine learning unit 21 acquires "user re-examination history" that is the information regarding whether a measure is actually taken. The example in FIG. 12 indicates that "Yes" is acquired for the individual g, "No" for the individual h, "No" for the individual i, and "Yes" for the individual j. This means that the measure such as re-examination has been executed for the individual g and the individual j.

Thereafter, the machine learning unit 21 executes machine learning using each of the targets of measure, "individual g, individual h, individual i, and individual j" as training data. Specifically, the machine learning unit 21 generates a measure determination model by executing machine learning having "sweetness variable X, acidity variable Y, mellowness variable Z, tastiness estimation Q', confidence degree Cd, and index Cl" as explanatory variables and "user re-examination history" as an objective variable. In this manner, the measure determination model for estimating necessity of user operation is generated.

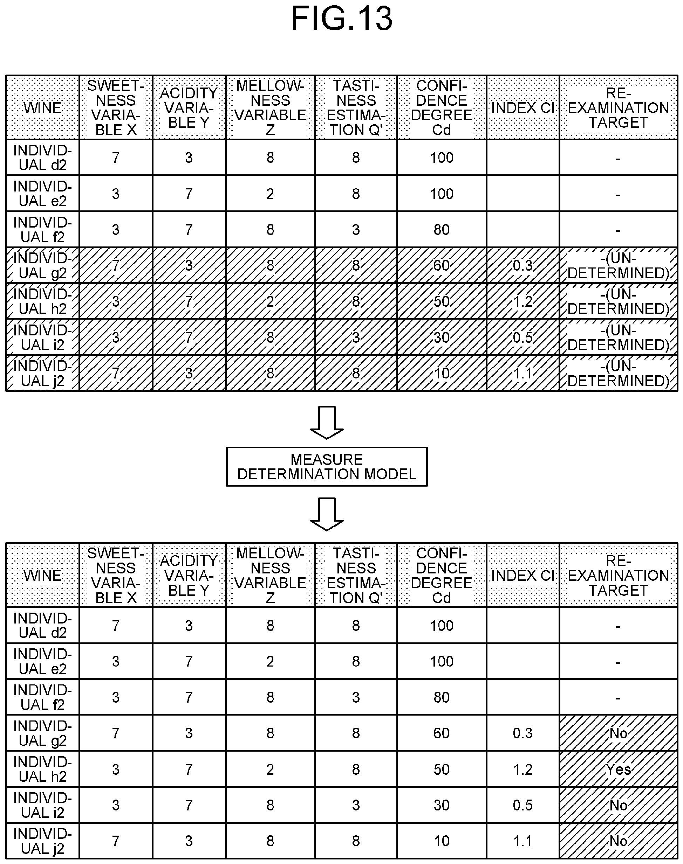

FIG. 13 is a diagram for describing measure determination using the measure determination model. As indicated in FIG. 13, the control unit 20 acquires "individual d2, individual e2, individual f2, individual g2, individual h2, individual 12, and individual j2" as new estimation target data. Note that "sweetness variable X, acidity variable Y, and mellowness variable Z" are set for each of the individuals. The estimation unit 22 then inputs the "sweetness variable X, acidity variable Y, and mellowness variable Z" for each piece of the new estimation target data into the machine learning model 15 to acquire the "tastiness estimation Q' and confidence degree Cd" as the estimation result.

Then, the linear processing unit 23 specifies "individual g2, individual h2, individual 12, and individual j2" whose confidence degree Cd is less than the threshold as the measurement candidates, and calculates the index Cl for each of the measurement candidates after executing generation of the linear model. Here, an example where "0.3, 1.2, 0.5, and 1.1" are calculated for "individual g2, individual h2, individual 12, and individual j2" is presented.

Thereafter, the display control unit 24 inputs the "sweetness variable X, acidity variable Y, mellowness variable Z, tastiness estimation Q', confidence degree Cd, and index Cl" to the measure determination model for each of the measure candidates "individual g2, individual h2, individual 12, and individual j2" to acquire the estimation result "re-examination target". Here, the display control unit 24 acquires "re-examination target = No" for the measure candidate "individual g2", "re-examination target = Yes" for "individual h2", "re-examination target = No" for "individual i2", and "re-examination target = No" for "individual j2".

As a result, among the measure candidates "Individual g2, Individual h2, Individual i2, Individual j2", the display control unit 24 determines "Individual h2" with "re-examination = Yes" as the target of measure, stores it in the storage unit 12, displays it on a display or the like, and transmits it to the administrator terminal.

As described above, the information processing device 10 can generate the measure determination model by machine learning using past history to automatically determine whether it is the target of measure, thereby making it possible to perform machine learning of habits, characteristics, and the like of a craftsman and improve the accuracy of selection regarding the measures. While an example of using "sweetness variable X, acidity variable Y, mellowness variable Z, tastiness estimation Q', confidence degree Cd, and index Cl" as explanatory variables is described above, those can be set arbitrarily. For example, when "sweetness variable X, acidity variable Y, mellowness variable Z, tastiness estimation Q', and confidence degree Cd" are used as explanatory variables, it is possible to reduce the cost of calculating the indices and shorten the calculation time.

The data examples, numerical examples, thresholds, display examples, number of dimensions of the feature space, specific examples, and the like used in the embodiments above are only examples, and can be changed as desired. Furthermore, image data, audio data, time series data, and the like can be used as training data, and the machine learning model 15 can also be used for image classification, various types of analysis, and the like. Furthermore, not only DNN but also other models such as convolution neural network (CNN) can be employed for the machine learning model 15. Moreover, the linear processing unit 23 can employ not only LIME but also other algorithms such as K-LIME or LIME-SUP.

The processing procedures, control procedures, specific names, and information including various kinds of data and parameters discussed in the above document and drawings may be changed as desired, unless otherwise specified.

In addition, each structural element of each of the devices illustrated in the drawings is of a functional concept, and does not need to be physically configured as illustrated in the drawings. In other words, the specific forms of distribution and integration of the devices are not limited to those illustrated in the drawings. That is, all or some thereof can be functionally or physically distributed and integrated in arbitrary units according to various kinds of loads, usage conditions, and the like.

Furthermore, all or any part of the processing functions performed by the devices can be achieved by a CPU and a computer program that is analyzed and executed by the CPU, or may be achieved by hardware using wired logic.

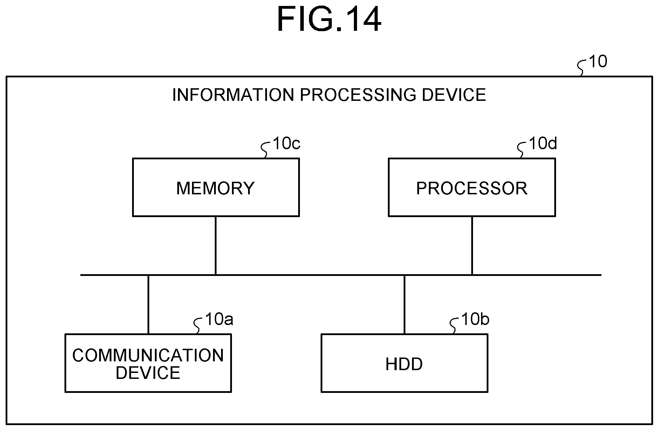

FIG. 14 is a diagram for describing an example of a hardware configuration. As illustrated in FIG. 14, the information processing device 10 includes a communication device 10a, a hard disk drive (HDD) 10b, a memory 10c, and a processor 10d. Furthermore, the units illustrated in FIG. 14 are interconnected by a bus or the like.

The communication device 10a is a network interface card or the like, and communicates with other devices. The HDD 10b stores therein computer programs and DBs that operate the functions illustrated in FIG. 3.

The processor 10d operates the process that executes each function described in FIG. 3 and the like by reading out a computer program, which executes the same processing as that of each of the processing units illustrated in FIG. 3, from the HDD 10b or the like, and loading it on the memory 10c. For example, this process executes the same functions as that of each of the processing units provided to the information processing device 10. Specifically, the processor 10d reads out, from the HDD 10b or the like, a program having the same functions as those of the machine learning unit 21, the estimation unit 22, the linear processing unit 23, the display control unit 24, and the like. Furthermore, the processor 10d executes the process that executes the same processing as those of the machine learning unit 21, the estimation unit 22, the linear processing unit 23, the display control unit 24, and the like.

In this manner, the information processing device 10 operates as an information processing device that executes an output control method by reading out and executing the computer program. The information processing device 10 can also read the computer program from a recording medium by a medium reading device, and execute the read computer program to achieve the same functions as those described in the embodiments. The computer program in another embodiment is not limited to being executed by the information processing device 10. For example, the present invention can be applied in the same manner to cases where other computers or servers execute the computer program or where those execute the computer program in cooperation.

This computer program can be distributed via a network such as the Internet. The computer program can also be recorded on a computer-readable recording medium such as a hard disk, a flexible disk (FD), a CD-ROM, a magneto-optical disk (MO), or a digital versatile disc (DVD), and executed by a computer by being read out from the recording medium.

### Reference Signs List

- 10: Information processing device
- 11: Communication unit
- 12: Storage unit
- 13: Training data set
- 14: Estimation target data set
- 15: Machine learning model
- 16: Estimation result
- 20: Control unit
- 21: Machine learning unit
- 22: Estimation unit
- 23: Linear processing unit
- 24: Display control unit

## Claims

1. An output control program causing a computer to execute a process comprising:
first acquiring, by inputting first data into a machine learning model, an estimation result output by the machine learning model;
when a first value included in the estimation result is lower than a threshold, by inputting the first data to a linear model generated based on the first data and the estimation result, second acquiring a second value output by the linear model; and
controlling output of the estimation result based on a difference between the first value and the second value.

2. The output control program according to claim 1, wherein
the machine learning model outputs the estimation result including an estimation value estimated by the machine learning model and a confidence degree of the estimation value,
the first acquiring includes inputting each of a plurality of pieces of data including the first data into the machine learning model to acquire the estimation result for each of the pieces of data;
the second acquiring includes
specifying, among the pieces of data, a plurality of pieces of second data that have a same estimation value as the estimation value of the first data and are located at a prescribed distance from the first data in a feature space generated by the machine learning model,
generating the linear model by locally approximating the first data using a feature corresponding to the first data as well as features and the estimation values corresponding to each of the pieces of second data, and
inputting the first data into the linear model to acquire the second value that is an approximation value; and
the controlling includes outputting the first data when an evaluation index calculated based on the difference between the first value and the second value is equal to or more than a threshold, and restraining output of the first data when the evaluation index is less than the threshold.

3. The output control program according to claim 2, wherein
the controlling includes:
among the pieces of data, selecting data having the estimation value less than a lower threshold as an output target, selecting data having the estimation value equal to or more than an upper threshold as not being the output target, and selecting data having the estimation value equal to or more than the lower threshold and less than the upper threshold as an output target candidate;
among the data of the output target candidate, selecting data having the evaluation index equal to or more than the threshold as the output target, and selecting data having the evaluation index less than the threshold as not being the output target; and
outputting, as an examination target, each piece of the data selected to be the output target.

4. The output control program according to claim 3, wherein the process further includes:
acquiring an examination result for each of the pieces of data output as the examination target;
generating a plurality of pieces of training data having each of the pieces of data as an explanatory variable and the examination result corresponding to each of the pieces of data as an objective variable; and
generating a determination model for determining whether the data corresponds to the examination target, by using the pieces of training data.

5. The output control program according to claim 4, wherein the process further includes:
third inputting estimation target data into the generated determination model to acquire a determination result determined by the determination model; and
specifying whether the estimation target data is the examination target based on the determination result.

6. An output control method causing a computer to execute a process comprising:
acquiring, by inputting first data into a machine learning model, an estimation result output by the machine learning model;
when a first value included in the estimation result is lower than a threshold, by inputting the first data to a linear model generated based on the first data and the estimation result, acquiring a second value output by the linear model; and
controlling output of the estimation result based on a difference between the first value and the second value.

7. An information processing device comprising a control unit configured to execute a process including:
acquiring, by inputting first data into a machine learning model, an estimation result output by the machine learning model;
when a first value included in the estimation result is lower than a threshold, by inputting the first data to a linear model generated based on the first data and the estimation result, acquiring a second value output by the linear model; and
controlling output of the estimation result based on a difference between the first value and the second value.
